# EUROPÄISCHE PATENTSCHRIFT

(11) **EP 1 107 497 B1**
(45) Veröffentlichungstag und Bekanntmachung des Hinweises auf die Patenterteilung: **14.06.2006**
(21) Anmeldenummer: 00440304.4
(22) Anmeldetag: 22.11.2000
(51) Int. Cl.: H04J 14/02, H04L 7/00

(54) **Synchrones digitales Nachrichtenübertragungssystem**
Synchonous digital communication system
Système de communication synchrone numérique

(30) Priorität: 11.12.1999 DE 19959815
(43) Veröffentlichungstag der Anmeldung: 13.06.2001
(73) Patentinhaber: ALCATEL, 75008 Paris (FR)
(72) Erfinder: Wolf, Michael Joachim, Dr., 74395 Mundelsheim (DE)
(74) Vertreter: Menzietti, Domenico

(56) Entgegenhaltungen:
- PATENT ABSTRACTS OF JAPAN Bd. 0134, Nr. 04 (E-817), 7. September 1989 (1989-09-07) -& JP 01 144832 A (NEC CORP), 7. Juni 1989 (1989-06-07)
- POWELL W E ET AL: "SYNCHRONIZATION AND TIMING OF SDH NETWORKS" ELECTRICAL COMMUNICATION, ALCATEL. BRUSSELS, BE, 1993, Seiten 349-358, XP009031880 ISSN: 0013-4252
- LIN Y-K M ET AL: "PASSIVE OPTICAL SUBSCRIBER LOOPS WITH MULTIACCESS" JOURNAL OF LIGHTWAVE TECHNOLOGY, IEEE. NEW YORK, US, Bd. 7, Nr. 11, 1. November 1989 (1989-11-01), Seiten 1769-1777, XP000104012 ISSN: 0733-8724

## Beschreibung

Die Erfindung bezieht sich auf ein synchrones digitales Nachrichtenübertragungssystem gemäß dem Oberbegriff des Patentanspruchs 1 sowie auf ein Verfahren zum optischen Übertragen von elektrischen Signalen gemäß dem Oberbegriff des Patentanspruchs 6.

Ein synchrones digitales Nachrichtenübertragungssystem arbeitet z.B. gemäß einem Standard für synchrone digitale Hierarchie (SDH/SONET-Standard). In einem solchen digitalen Übertragungssystem sind einzelne Netzelemente durch unterschiedliche Übertragungsmedien (z.B. Kupferkabel, Lichtwellenleiter oder Funkstrecken) miteinander verbunden. Ein Netzelement ist z.B. eine Vermittlungsstelle für ein öffentliches Fernsprechnetz, ein Cross-Connect oder ein Add/Drop-Multiplexer. Zur Synchronisation der Netzelemente sind zwei Verfahren bekannt: Master/Slave-Synchronisation und gegenseitige Synchronisation.

Beim Master/Slave-Verfahren, auch hierarchische Synchronisation genannt, wird ein einziger, in einer Primär-Referenzquelle erzeugter Primär-Referenztakt zur Synchronisation der ersten Hierarchieebene von Netzelementen, auch Knoten genannt, verwendet. Diese Knoten übergeben ihre abgeleiteten Takte an die Knoten der nächsten Ebene und so weiter. Ein solches Synchronisierverfahren ist beispielsweise in dem Artikel "Synchronization and Timing of SDH Networks" von W. Powell et all, Alcatel Electrical Communications, S. 349-359, 1993 beschrieben.

Beim Verfahren der gegenseitigen Synchronisation sind alle Knoten gleichwertig über die bestehenden digitalen Verbindungen miteinander verbunden. In jedem Knoten wird aus den eintreffenden Taktsignalen und dem eigenen internen Takt der mittlere Phasenwert berechnet.

Aus DE4446511 ist bekannt, zur Vermeidung von Synchronisationsschleifen eine Synchronisationshierarchie festzulegen durch Einteilung der für die Synchronisierung verwendeten Schnittstelleneinrichtungen jedes Netzelements in zwei Klassen. In Schnittstelleneinrichtungen der einen Klasse werden empfangene Synchronisationssignale ignoriert, von den Schnittstelleneinrichtungen der anderen Klasse werden Synchronisationssignale (Taktreferenzen) ausgesandt.

Netzelemente haben mehrere Schnittstelleneinrichtungen, die in der Regel alle zum Empfang und Aussendung von Nachrichtensignalen, d.h. Sprache, Daten, etc. dienen. Einige, vordefinierte Schnittstelleneinrichtungen dienen zusätzlich dem Empfang und/oder der Aussendung von Synchronisationssignalen. Rein elektrische synchrone digitale Nachrichtenübertragungssysteme haben fest verschaltete physikalische Verbindungen. Eine Synchronisationshierarchie wird durch vorab festgelegte Pfade festgelegt. Bei der abschnittsweisen Verwendung von Funk oder optischer Übertragung im Punkt-zu-Punkt Verfahren werden die elektrischen Signale (Nachrichten + Synchronisation) transparent durchgeschalten. Die für die Synchronisation bestimmten Schnittstelleneinrichtungen der Netzelemente erhalten so stets die nötigen Synchronisationssignale. Selbst wenn zwischenzeitlich keine Nachrichten übertragen werden, werden die Verbindungen zwischen den Netzelementen aufrechterhalten, z.B. durch Aussendung von Default-Nachrichten, so dass eine kontinuierliche Synchronisation gewährleistet ist.

Eine neue Situation tritt ein, wenn bei der abschnittsweisen optischen Übertragung keine zeitlich unveränderbare Durchschaltung erfolgt. Optische Verbindungen sind nun nicht mehr fest Wellenlängen zugeordnet. Eine flexible und zeitlich varierbare Zuweisung von optischen Kanälen zu Wellenlängen ist möglich. Ein optischer Kanal zur Übertragung eines ersten Nachrichtenpakets wird z.B. über eine erste umschaltbare optische Verbindung unter Verwendung einer ersten Wellenlänge realisiert. Ein optischer Kanal zur Übertragung eines zweiten Nachrichtenpakets wird z.B. über eine zweite umschaltbare optische Verbindung unter Verwendung einer zweiten Wellenlänge realisiert. Werden in Verbindung mit Wellenlängenmultiplex Netzelemente mit Vermittlungseigenschaften eingesetzt, z.B. optische Cross-Connects, so können optische Kanäle beliebig und zeitlich variabel zur Übertragung von Nachrichtensignalen, z.B. SDH- oder SONET-Signalen eingerichtet werden. Eine erste optische Verbindung zur Einrichtung eines ersten optischen Kanals wird beispielsweise in einer ersten Zeitspanne zur Übertragung von Nachrichten von einem ersten Netzelement zu einem zweiten Netzelement genutzt, wobei zwischen die Netzelemente ein optischer Cross-Connect geschaltet ist. Die erste optische Verbindung wird z.B. unter Verwendung einer ersten Wellenlänge realisiert. Über die der ersten Wellenlänge zugeordnete Schnittstelleneinrichtung synchronisiert sich das zweite Netzelement. D.h. der Synchronisationstakt, der einem Bittakt entspricht, wird für alle Schnittstelleneinrichtungen des zweiten Netzelementes verwendet. Wenn nun in einer zweiten Zeitspanne die erste Wellenlänge durch den optischen Cross-Connect für eine zweite optische Verbindung zur Einrichtung eines zweiten optischen Kanals zur Übertragung von Nachrichten von dem ersten Netzelement zu einem dritten Netzelement verwendet wird, ist die Verbindung über die erste Wellenlänge zum zweiten Netzelement unterbrochen. Das zweite Netzelement kann sich in der zweiten Zeitspanne nicht mehr synchronisieren. Selbst wenn das zweite Netzelement über eine zweite oder dritte optische Verbindung Nachrichten- und/oder Synchronisationsignale empfangen würde, kann es sich dennoch nicht synchronisieren, da nur die der ersten Wellenlänge zugeordnete Schnittstelleneinrichtung zum Zwecke der Vornahme der Synchronisation für alle Schnittstelleneinrichtungen reserviert ist. Anstelle durch eine Schnittstelleneinrichtung kann die Synchronisation auch unter Verwendung von zwei oder drei Schnittstelleneinrichtungen, z.B. mittels einer zusätzlichen Auswahleinrichtung, die den qualitativ besten Takt auswählt, durchgeführt werden. Durch die Verwendung von drei Schnittstelleneinrichtungen für Zwecke der Synchronisation in Verbindung mit drei Wellenlängen kann zwar die Wahrscheinlichkeit, dass keine Synchronisation möglich ist minimiert, jedoch nicht ausgeschlossen werden.

In Patent Abstracts of Japan Bd. 0134 Nr. 04 (E-817), 7. Sept. 1989 und JP 1 144832 A wird vorgeschlagen, Rahmentakt- und Bittaktinformationen auf eigenen, vom Datensignal verschiedenen Wellenlängen zu übertragen. Dies bedeutet jedoch eine erhebliche Bandbreitenverschwendung.

Die Erfindung schlägt ein synchrones digitales Nachrichtenübertragungssystem gemäß Patentanspruch 1 und ein Verfahren zum optischen Übertragen von elektrischen Signalen gemäß Patentanspruch 6 vor.

Das erfindungsgemäße synchrones digitale Nachrichtenübertragungssystem dient zur optischen Übertragung von elektrischen Signalen. Die zu übertragenden elektrischen Signale werden elektrisch/optisch umgesetzt und im Wellenlängenmultiplex übertragen werden. Dazu wird WDM oder DWDM verwendet; WDM=Wavelength Division Multiplex, DWDM=Dense WDM. Es sind ein Synchronisations-Manager und ein Connection-Manager vorgesehen. Der Synchronisations-Manager ist geeignet, dedizierte, optische Synchronisationsverbindungen zu konfigurieren. Der Connection-Manager ist geeignet, aus einem Pool von Wellenlängen umschaltbare, optische Nachrichtenverbindungen nur unter Berücksichtigung der dedizierten Synchronisationsverbindungen zu konfigurieren. Dies hat den Vorteil, dass unabhängig von den geschalteten Nachrichtenverbindungen stets eine Synchronisation im gesamten System gewährleistet ist. Jedes Netzelement hat zumindest eine Schnittstelleneinrichtung, die für die Synchronisation reserviert ist und die stets Signale über die für die Synchronisation reservierte Wellenlänge empfängt.

Das synchrone digitale Nachrichtenübertragungssystem beinhaltet z.B. mindestens drei jeweils mindestens einen Elektrisch/Optisch-Umsetzer und mindestens einen Optisch/Elektrisch-Umsetzer beinhaltende Netzelemente, die über optische Leitungen miteinander verbunden sind. Des weiteren ist mindestens ein optischer Cross-Connect vorgesehen, der zwischen die Netzelemente geschaltet ist. Jeder optische Cross-Connect ist geeignet, einzelne Wellenlängen zur geschalteten Weiterleitung von Signalen eines Netzelements zu einem anderen Netzelement zu verwenden. Der Cross-Connect führt Schaltoperationen für Nachrichtenverbindungen aus. Er ist aber bezüglich des Schaltens auf diejenigen Wellenlängen beschränkt, die die eingerichtete Synchronisation nicht beeinträchtigen.

In einer bevorzugten Ausführungsform beinhaltet das synchrone digitale Übertragungssystem mindestens drei über optische Leitungen verbundene Netzelemente, die als SDH- oder SONET-Elemente ausgeführt sind. Zwischen den Netzelementen ist durch den Synchronisations-Manager eine hierarchische Synchronisation oder eine gegenseitige Synchronisation eingerichtet. Der Connection-Manager überprüft vor der Umschaltung einer optischen Nachrichtenverbindung, ob die eingerichtete Synchronisation durch die geplante Umschaltung beeinträchtigt wird. Ist dies der Fall, unterbleibt die geplante Umschaltung. Es wird nach einer alternativen Verbindung gesucht. Erst wenn eine Verbindung gefunden ist, die die eingerichtete Synchronisation nicht beeinträchtigt, wird umgeschaltet. Beispielsweise wird ein in einem ersten Netzelement generierter Referenztakt zum Zwecke der Synchronisation über eine erste Wellenlänge zu einem zweiten Netzelement übertragen. Ein im zweiten Netzelement aus dem empfangenen Referenztakt abgeleiteter Takt wird über eine zweite, Wellenlänge zu einem dritten Netzelement übertragen. Zwischen dem ersten und dem zweiten Netzelement ist dann die erste Wellenlänge für die Übertragung von Synchronisationssignalen reserviert, kann aber gleichzeitig für die Übertragung von Nachrichten verwendet werden. Alle verfügbaren Wellenlängen, z.B. zwanzig Stück, werden für die Übertragung von Nachrichtensignale über umschaltbare optische Verbindungen genutzt. Vor der Umschaltung einer optischen Verbindung, wird insbesondere überprüft, ob die erste Wellenlänge betroffen ist. Sollte dies der Fall sein und eine Umschaltung auf eine andere Wellenlänge ohne Ersatz vorgesehen sein, so hätte dies zur Folge, dass die Synchronisation für das zweite Netzelement und alle folgenden Netzelemente unterbrochen wird. Eine solche Umschaltung wird daher nicht genehmigt. Zwischen dem zweiten und dem dritten Netzelement ist die zweite Wellenlänge für die Übertragung von Synchronisationssignalen reserviert und kann zusätzlich für die Übertragung von Nachrichten verwendet werden. Betrifft eine geplante Umschaltung die zweite Wellenlänge im Bereich zwischen dem zweiten Netzelement und dem dritten Netzelement, so wird diese Umschaltung ebenfalls nicht genehmigt. Auf jeder Strecke zwischen zwei Netzelementen gibt es somit mindestens eine Wellenlänge, die für Synchronisationszwecke dient und daher in der Regel nicht umschaltbar ist. Die Synchronisation im gesamten System ist garantiert.

Der Synchronisations-Manager oder der Connection-Manager haben beispielsweise Zugriff auf eine abgespeicherte Tabelle, in der die Topologie der Synchronisationsverbindungen abgespeichert ist. Als ein Kriterium für eine Beeinträchtigung der eingerichteten Synchronisation gilt z.B. eine fehlende alternative Synchronisationsverbindung. Der Connection-Manager kann die geplante Umschaltung nur durchführen, wenn keine oder eine hinnehmbare Beeinträchtigung der eingerichteten Synchronisation vorliegt.

Synchronisations-Manager und Connection-Manager dienen als Netzwerk-Management. Bei der Systemplanung werden die Anzahl der Netzelemente, die Anzahl der möglichen Verbindungen, etc. ermittelt. Für die Synchronisation wird im Synchronisations-Manager eine Topologie entworfen. Beispielsweise wird eine Master/Slave-Synchronisation gewählt. Für die Implementierung dieser Synchronisatioon werden die nötigen Pfade ermittelt. In jedem Netzelement wird mindestens ein Schnittstellenelement für die Synchronisation ausgewählt. Den ausgewählten Schnittstellenelementen wird jeweils eine Wellenlänge zugeordnet. Diese Wellenlänge und der zugehörige Pfad werden derart konfiguriert, dass ein Pfad eingerichtet wird, über den stetig Synchronisationssignale übertragen werden. Nach Abschluss der Konfigurierung der Synchronisationsverbindungen erfolgt das Konfigurieren der Nachrichtenverbindungen. Nachrichten werden über geschaltete Nachrichtenverbindungen übertragen und können zusätzlich über die Synchronisationsverbindungen übertragen werden. Die für die Synchronisationsverbindungen reservierten Wellenlängen sind für den Connection-Manager nur eingeschränkt benutzbar, da besondere Kriterien für die Umschaltung berücksichtigt werden müssen.

Beim erfindungsgemäßen Verfahren zum optischen Übertragen von elektrischen Signalen werden die zu übertragenden elektrischen Signale elektrisch/optisch umgesetzt und im Wellenlängenmultiplex übertragen, wobei dedizierte, optische Synchronisationsverbindungen konfiguriert werden und aus einem Pool von Wellenlängen (λ₁, λₙ) umschaltbare, optische Nachrichtenverbindungen nur unter Berücksichtigung der dedizierten Synchronisationsverbindungen konfiguriert werden.

In einer speziellen Logik findet unter Heranziehung vorgegebener Kriterien eine Überprüfung dahingehend statt, ob die geplante Umschaltung einer Nachrichtenverbindung eine nicht erwünschte Auswirkung auf die Synchronisationsverbindungen hat. Für den Fall einer nicht erwünschten Auswirkung wird die geplante Umschaltung unterbunden.

Im folgenden wird die Erfindung anhand eines Ausführungsbeispiels unter Zuhilfenahme zweier Figuren erläutert. Es zeigen:
- Fig.1: eine schematische Darstellung eines erfindungsgemäßen synchronen digitalen Nachrichtenübertragungssystems und
- Fig.2: eine schematische Darstellung eines Ausschnitts des Netzelementes NE1 aus Fig. 1.

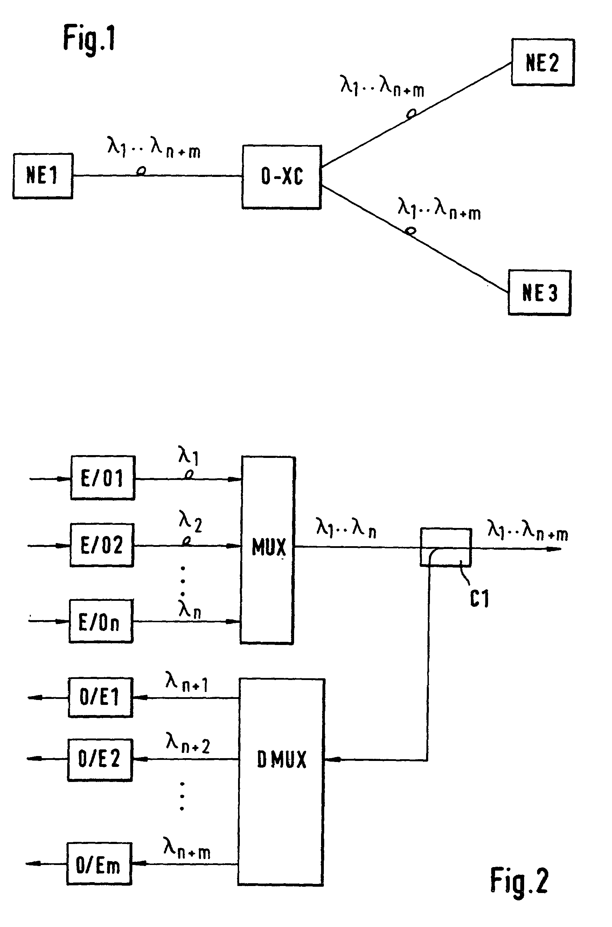

Das Ausführungsbeispiel wird nun zunächst unter Zuhilfenahme von Fig. 1 erläutert. Fig. 1 zeigt ein synchrones digitales Nachrichtenübertragungssystem. Das Nachrichtenübertragungssystem beinhaltet drei Netzelemente NE1, NE2, NE3, die über optische Leitungen miteinander verbunden sind.

Zwischen die Netzelemente NE1, NE2, NE3 ist ein optischer Cross-Connect O-XC geschaltet. Über die optischen Leitungen, die z.B. aus optischen Glasfaserleitungen aufgebaut sind werden optische Signale im Wellenlängenmultiplex (WDM) oder DWDM übertragen. Es sind n+m Wellenlängen vorgesehen. Das Nachrichtenübertragungssystem ist als bidirektionales Übertragungssystem ausgeführt. Die Wellenlängen λ₁ bis λₙ sind für die Übertragung von Signalen von Netzelement NE1 zu den Netzelementen NE2, NE3 vorgesehen. Die Wellenlängen λₙ₊₁ bis λₙ₊ₘ sind für die Übertragung von Signalen von den Netzelementen NE2, NE3 zu Netzelement NE1 vorgesehen; n und m sind natürliche Zahlen, beispielsweise n=20, m=20.

Das Nachrichtensystem stellt die Minimalversion eines Nachrichtensystems dar, das WDM über Mehrpunkt-zu-Mehrpunkt ermöglicht. Die Erfindung ist auch auf einfache Art und Weise auf Übertragungssysteme mit mehr als drei Netzelementen, z.B. eintausend, anwendbar, die z.B. über ein Maschennetz aus optischen Cross-Connectoren und Add/Drop-Multiplexern miteinander verbunden sind. Generell ist die Erfindung auf jedes synchrone Übertragungssystem anwendbar, das mindestens drei elektrische Teilnetze über ein optisches Teilnetz derart miteinander verbindet, dass umschaltbare optische Verbindungen möglich sind.

Das Ausführungsbeispiel wird nun weiter unter Zuhilfenahme von Fig. 2 erläutert. Fig. 2 zeigt einen Ausschnitt aus Netzelement NE1 aus Fig. 1. Netzelement NE1 beinhaltet n Elektrisch/Optisch-Umsetzer E/O1, E/O2, ..., E/On und m Optisch/Elektrisch-Umsetzer O/E1, O/E2, ..., O/Em. Die n Elektrisch/Optisch-Umsetzer E/O1, E/O2, ..., E/On dienen dazu, die über die Schnittstelleneinrichtungen des Netzelementes NE1 ausgesendeten und über das optische Netz zu übertragenden elektrischen Signale elektrisch/optisch umzusetzen. Die erste Schnittstelleneinrichtung ist dazu mit dem Elektrisch/Optisch-Umsetzer E/O1 verbunden und ihm fest zugeordnet, die zweite Schnittstelleneinrichtung mit dem Elektrisch/Optisch-Umsetzer E/02, usw. Jeder Elektrisch/Optisch-Umsetzer E/O1, E/O2, ..., E/On generiert eine andere Wellenlänge. Alle Wellenlängen λ₁ bis λₙ werden in einem z.B. als optischen Combiner ausgeführten Multiplexer MUX zusammengefaßt. Die überlagerten Wellenlängen werden gemeinsam über das optische Netz übertragen. Der optische Cross-Connect schaltet optische Verbindungen entsprechend ihrer Zieladresse. Sollen z.B. Nachrichten über eine optische Verbindung zum Netzelement NE2 weitergeleitet werden, so schaltet der optische Cross-Connect O-XC die erforderliche Anzahl optischer Verbindungen unter Verwendung von Wellenlängen, z.B. der Wellenlängen λ₂ bis λ₃ entsprechend durch. Sollen z.B. Nachrichten über eine weitere optische Verbindung zum Netzelement NE3 weitergeleitet werden, so schaltet der optische Cross-Connect O-XC die erforderliche Anzahl optischer Verbindungen unter Verwendung von Wellenlängen, z.B. die Wellenlängen λ₄ bis λ₅ entsprechend durch. In einer weiteren Zeitspanne können z.B. Nachrichten über die Wellenlängen λ₂ und λ₅ zum Netzelement NE3 weitergeleitet werden sowie über die Wellenlängen λ₃ bis λ₄ zum Netzelement NE3. Um die Synchronisation im Netz stetig zu gewährleisten ist mindestens eine optische Verbindung, z.B. unter Verwendung der Wellenlänge λ₁ zur permanenten Übertragung von Synchronisationssignalen reserviert. Es wird eine in der Regel nicht umschaltbare, optische Verbindung konfiguriert, z.B. unter Verwendung der Wellenlänge λ₁ von Netzelement NE1 zum optischen Cross-Connect O-XC sowie unter Verwendung der Wellenlänge λ₁ oder einer anderen Wellenlänge vom optischen Cross-Connect O-XC zum Netzelement NE2. Es wird eine weitere, in der Regel nicht umschaltbare, optische Verbindung konfiguriert, z.B. unter Verwendung der Wellenlänge λ₂ von Netzelement NE1 zum optischen Cross-Connect O-XC sowie unter Verwendung der Wellenlänge λ₂ oder einer anderen Wellenlänge vom optischen Cross-Connect O-XC zum Netzelement NE3. Bei Vorliegen besonderer Kriterien kann die optische Verbindung umgeschaltet werden. Dem Elektrisch/Optisch-Umsetzer E/O1 und dem Elektrisch/Optisch-Umsetzer E/O2 werden jeweils ein in einer Primär-Referenzquelle generierter Synchronisationstakt zugeführt. Der Synchronisationstakt wird über die reservierte Wellenlänge λ₁ Netzelement NE2 und über die reservierte Wellenlänge λ₂ Netzelement NE3 zugeführt. Beide Netzelemente NE2, NE3 synchronisieren sich auf den empfangenen Takt.

Netzelement NE1 empfängt Nachrichten von Netzelementen NE2 und NE3 über eine optische Auskoppelvorrichtung C1 und einen Demultiplexer DMUX, der einzelne Wellenlängen selektiert und an die Optisch/Elektrisch-Umsetzer O/E1, O/E2, ..., O/Em weiterleitet. Die Auskoppelvorrichtung C1 koppelt alle Wellenlängen λₙ₊₁ bis λₙ₊ₘ aus der optischen Glasfaser aus; n und m können auch unterschiedliche Werte aufweisen. Der Demultiplexer DMUX ist beispielsweise als wellenlängenabhängiger Splitter ausgeführt. Jeder Optisch/Elektrisch-Umsetzer O/E1, O/E2, ..., O/Em setzt eine andere Wellenlänge um und leitet das entsprechende elektrische Signal an eine Schnittstelleneinrichtung des Netzelementes NE1 weiter. Beim Master/Slave-Verfahren (hierarchische Synchronisation) können alle Wellenlängen λₙ₊₁ bis λₙ₊ₘ zur Übertragung von Nachrichtensignalen von den Netzelementen NE2 und NE3 zum Netzelement NE1 beliebig genutzt werden. Bei der gegenseitigen Synchronisation sind beispielsweise insgesamt sechs optische Verbindungen für die Synchronisationssignale reserviert; eine erste optische Verbindung zur Übertragung von Synchronisationssignalen von Netzelement NE1 zu Netzelement NE2, eine zweite zur Übertragung von Netzelement NE1 zu Netzelement NE3, eine dritte zur Übertragung von Netzelement NE2 zu Netzelement NE1, eine vierte zur Übertragung von Netzelement NE2 zu Netzelement NE3, eine fünfte zur Übertragung von Netzelement NE3 zu Netzelement NE1, eine sechste zur Übertragung von Netzelement NE3 zu Netzelement NE2. Für jede optische Verbindung können einzelnen Wellenlängen, z.B. die Wellenlänge λₙ₊₁ für die Übertragung der Synchronisationssignale von Netzelement NE2 zu Netzelement NE1 sowie die Wellenlänge λₙ₊₂ für die Übertragung der Synchronisationssignale von Netzelement NE2 zum optischen Cross-Connect O-XC und die Wellenlänge λ₃ zur Weiterleitung vom optischen Cross-Connect O-XC zum Netzelement NE3, reserviert werden. Diese optischen Verbindungen sind fest verschaltet, und können daher nur eingeschränkt für Nachrichtenübertragungen genutzt werden. Die übrigen, nicht zur Übertragung von Synchronisationssignalen genutzten Wellenlängen können dann für die Übertragung von Nachrichten über beliebig geschaltete, optische Verbindungen genutzt werden.

Es sind ein Synchronisations-Manager und ein Connection-Manager vorgesehen. Sie dienen als Netzwerk-Management. Bei der Systemplanung werden die Anzahl der Netzelemente, die Anzahl der möglichen Verbindungen, etc. ermittelt. Für die Synchronisation wird im Synchronisations-Manager eine Topologie entworfen. Beispielsweise wird eine Master/Slave-Synchronisation gewählt. Für die Implementierung dieser Synchronisatioon werden die nötigen Pfade ermittelt. In jedem Netzelement NE1, NE2, NE3 wird mindestens ein Schnittstellenelement für die Synchronisation ausgewählt. Werden mehrere Schnittstellenelemente ausgewählt, können mehrere alternative Synchronisationspfade eingerichtet werden. Den ausgewählten Schnittstellenelementen wird jeweils eine Wellenlänge zugeordnet. Diese Wellenlänge und der zugehörige Pfad werden derart konfiguriert, dass ein Pfad eingerichtet wird, über den stetig Synchronisationssignale übertragen werden. Nach Abschluss der Konfigurierung der Synchronisationsverbindungen erfolgt das Konfigurieren der Nachrichtenverbindungen. Nachrichten werden über geschaltete Nachrichtenverbindungen übertragen und können zusätzlich über die Synchronisationsverbindungen übertragen werden. Die für die Synchronisationsverbindungen reservierten Wellenlängen sind für den Connection-Manager nur eingeschränkt benutzbar, da besondere Kriterien für die Umschaltung berücksichtigt werden müssen.

Der Synchronisations-Manager oder der Connection-Manager haben beispielsweise Zugriff auf eine abgespeicherte Tabelle, in der die Topologie der Synchronisationsverbindungen abgespeichert ist. Als ein Kriterium für eine Beeinträchtigung der eingerichteten Synchronisation gilt z.B. eine fehlende alternative Synchronisationsverbindung. Der Connection-Manager kann die geplante Umschaltung nur durchführen, wenn keine oder eine hinnehmbare Beeinträchtigung der eingerichteten Synchronisation vorliegt. Als Kriterien für eine Erlaubnis der Umschaltung sind beispielsweise vorgesehen:
- Über die umzuschaltende optische Verbindung werden keine Nachrichten übertragen, aber Synchronisationssignale und es existiert noch eine zweite optische Verbindung, über die Synchronisationssignale übertragen werden, so dass die Synchronisation aufrechterhalten werden kann.
- Über die umzuschaltende optische Verbindung werden weder Nachrichten noch Synchronisationssignale übertragen und es existiert keine alternative Synchronisationsverbindung, aber der Verlust der Synchronisation kann auf Grund besonderer Umstände hingenommen werden, z.B. letztes Netzelement in einer Kette, für das auch sonst keine Nachrichten vorliegen.
- Über die umzuschaltende optische Verbindung werden weder Nachrichten noch Synchronisationssignale übertragen und es existiert keine alternative Synchronisationsverbindung, aber durch die neue, geplante, optische Verbindung wird eine neue Synchronisationsverbindung geschaffen, die die alte ersetzen kann.
- Über die umzuschaltende optische Verbindung werden Nachrichten und Synchronisationssignale übertragen und durch die neue, geplante, optische Verbindung wird eine neue Synchronisationsverbindung geschaffen, die die alte ersetzen kann.

Zusätzlich zu obigen Kriterien, die eine mögliche Auswahl darstellen, sollte stets die Struktur des veränderten Synchronisationsnetzes auf die entsprechenden Design-Regeln hin überprüft werden, bevor die Erlaubnis zur Umschaltung erteilt wird.

Beim erfindungsgemäßen Verfahren zum optischen Übertragen von elektrischen Signalen werden die zu übertragenden elektrischen Signale elektrisch/optisch umgesetzt und im Wellenlängenmultiplex übertragen, wobei dedizierte, optische Synchronisationsverbindungen konfiguriert werden und aus einem Pool von Wellenlängen λ₁, λₙ umschaltbare, optische Nachrichtenverbindungen nur unter Berücksichtigung der dedizierten Synchronisationsverbindungen konfiguriert werden.

In einer speziellen Logik, z.B. beinhaltend einen entsprechend programmierten Mikroprozessor, einen Speicher, einen Vergleicher, etc. findet unter Heranziehung vorgegebener Kriterien eine Überprüfung dahingehend statt, ob die geplante Umschaltung einer Nachrichtenverbindung eine nicht erwünschte Auswirkung auf die Synchronisationsverbindungen hat. Für den Fall einer nicht erwünschten Auswirkung wird die geplante Umschaltung unterbunden.

Bei der gegenseitigen Synchronisation sind beispielsweise zwei, drei oder vier Schnittstelleneinrichtungen des Netzelementes NE1 für Synchronisationszwecke reserviert und Elektrisch/Optisch-Umsetzer bzw. Optisch/Elektrisch-Umsetzern fest zugeordnet. Bei der gegenseitigen Synchronisation werden alle Signale verwendet und deren relatives Gewicht für die Synchronisation wird durch einen Algorithmus festgelegt. Bei mehreren, alternativen und nahezu gleichwertigen Synchronisationsverbindungen können einzelne geplante Umschaltungen von Nachrichtenverbindungen, die Synchronisationsverbindungen betreffen, erlaubt werden, solange noch eine gleichwertige alternative Synchronisationsverbindung aufrechterhalten wird.

## Patentansprüche

1. Synchrones digitales Nachrichtenübertragungssystem zur optischen Übertragung von elektrischen Signalen, bei dem die zu übertragenden elektrischen Signale elektrisch/optisch (E/O1, E/02, E/On) umgesetzt und im Wellenlängenmultiplex übertragen werden,
**dadurch gekennzeichnet,**
**dass** ein Synchronisations-Manager und ein Connection-Manager vorgesehen sind, dass der Synchronisations-Manager geeignet ist, dedizierte, optische Synchronisationsverbindungen zu konfigurieren, und dass der Connection-Manager geeignet ist, aus einem Pool von Wellenlängen (λ₁, λₙ) umschaltbare, optische Nachrichtenverbindungen nur unter Berücksichtigung der dedizierten Synchronisationsverbindungen zu konfigurieren.

2. Übertragungssystem nach Anspruch 1, **dadurch gekennzeichnet, dass** mindestens drei jeweils mindestens einen Elektrisch/Optisch-Umsetzer (E/O1, E/O2, E/On) und mindestens einen Optisch/Elektrisch-Umsetzer (O/E1, O/E2, O/Em) beinhaltende Netzelemente (NE1, NE2, NE3) über optische Leitungen miteinander verbunden sind, dass mindestens ein optischer Cross-Connect (O-XC) zwischen die Netzelemente (NE1, NE2, NE3) geschaltet ist, und dass der mindestens eine optische Cross-Connect (O-XC) geeignet ist, einzelne Wellenlängen (λ₁, λₙ) zur geschalteten Weiterleitung von Nachrichtensignalen eines Netzelements (NE1, NE2, NE3) zu einem anderen Netzelement (NE1, NE2, NE3) zu verwenden.

3. Übertragungssystem nach Anspruch 1, **dadurch gekennzeichnet, dass** mindestens drei über optische Leitungen verbundene Netzelemente (NE1, NE2, NE3) vorgesehen sind, dass die Netzelemente (NE1, NE2, NE3) SDH- oder SONET-Elemente sind, dass der Synchronisations-Manager geeignet ist, zwischen den Netzelementen (NE1, NE2, NE3) eine hierarchische Synchronisation oder eine gegenseitige Synchronisation einzurichten, und dass der Connection-Manager geeignet ist, vor der Umschaltung einer optischen Nachrichtenverbindung zu überprüfen, ob die eingerichtete Synchronisation durch die geplante Umschaltung beeinträchtigt wird.

4. Übertragungssystem nach Anspruch 3, **dadurch gekennzeichnet, dass** der Synchronisations-Manager oder der Connection-Manager Zugriff auf eine abgespeicherte Tabelle haben, in der die Topologie der Synchronisationsverbindungen abgespeichert ist, und dass als ein Kriterium für eine Beeinträchtigung der eingerichteten Synchronisation eine fehlende alternative Synchronisationsverbindung gilt.

5. Übertragungssystem nach Anspruch 3, **dadurch gekennzeichnet, dass** der Connection-Manager die geplante Umschaltung nur durchführen kann, wenn keine oder eine hinnehmbare Beeinträchtigung der eingerichteten Synchronisation vorliegt.

6. Verfahren zum optischen Übertragen von elektrischen Signalen, bei dem die zu übertragenden elektrischen Signale elektrisch/optisch (E/O1, E/O2, E/On) umgesetzt werden und im Wellenlängenmultiplex übertragen werden,
**dadurch gekennzeichnet,**
**dass** dedizierte, optische Synchronisationsverbindungen konfiguriert werden, und dass aus einem Pool von Wellenlängen (λ₁, λₙ) umschaltbare, optische Nachrichtenverbindungen nur unter Berücksichtigung der dedizierten Synchronisationsverbindungen konfiguriert werden.

7. Verfahren nach Anspruch 6, **dadurch gekennzeichnet, dass** in einer speziellen Logik unter Heranziehung vorgegebener Kriterien eine Überprüfung dahingehend stattfindet, ob die geplante Umschaltung einer Nachrichtenverbindung eine nicht erwünschte Auswirkung auf die Synchronisationsverbindungen hat, und dass für den Fall einer nicht erwünschten Auswirkung die geplante Umschaltung unterbunden wird.

## Claims

1. Synchronous digital communication system for the optical transmission of electrical signals, in which the electrical signals to be transmitted are converted electrically/optically (E/O1, E/O2, E/On) and transmitted in wavelength multiplex, **characterized in that** a synchronization manager and a connection manager are provided, that the synchronization manager is suitable for configuring dedicated, optical synchronization connections, and that the connection manager is suitable for configuring switchable, optical message connections from a pool of wavelengths (λ₁, λₙ) only taking the dedicated synchronization connections into consideration.

2. Communication system according to claim 1., **characterized in that** at least three network elements (NE1, NE2, NE3) each conL.aining at least one electrical/optical converter (E/O1, E/O2, E/On) and at least one optical/electrical converter (O/E1, O/E2, O/Em) are connected to one another via optical lines, that at least one optical cross-connect (O-XC) is connected between the network elements (NE1, NE2, NF3) and that the at least one optical cross-connect (O-XC:) is suitable for using individual wavelengths (λ₁, λₙ) for the switched forwarding of message signals of one network element (NE1, NE2, NE3) to another network element (NE1, NE2, NE3).

3. Communication system according to claim 1, **characterized in that** aL least three network elements (NE1, NE2, NE3) connected via optical lines are provided, that the network elements (NE1, NE2, NE3) are SDH ox SONET elements, that the synchronization manager is suitable for setting up a hierarchical synchrorlization or a mutual synchronization between the network elements (NE1, NE2, NE3), and that the connection manager is suitable for checking prior to the switchover of an optical message connection whether the synchronization that has been set up i.s adversely affected by the planned switchover.

4. Communication system according to claim 3, **characterized in that** the synchronization manager or the connection manager has access to a stored table in which the topology of the synchronizatiorl connections is stored, and that the lack of an alternative synchronization ronnection is regarded as a criterion fur an impairment of the synchronisation that his been set up.

5. Communication system according to claim 3, **characterized in that** the c-nnnectiori manager can only execute the planned switchover if no impairment or an acceptable impairment of the synchronization that has been set up exists.

6. Method for the optical transmission of electrical signals, in which t.he electrical signals to be transmitted are converted electrically/optically (E/O1, E/O2, E/On) and transmitted in wavelength multiplex, **characterized in that** dedicated, optical synchronization connections are configured, and that switchable, optical message connections are nonfigured from a pool of wavelengths (λ₁, λₙ) only taking the dedicated synchronization connections into consideration.

7. Method according to claim 6, **characterized in that** in a special logic a check takes place, drawing on predetermined criteria, as to whether the planned switchover of a message connection has an undesired effect on the synchronization connections, and that in the event of an undesired effect, the planned switchover is suppressed.

## Revendications

1. Système de communication asynchrone numérique pour la transmission optique de signaux électriques, dans lequel les signaux électriques à transmettre font l'objet d'une conversion électrique/optique (E/O1, E/O2, E/On) et sont transmis dans le multiplexage de longueurs d'onde,
**caractérisé en ce que**,
un gestionnaire de synchronisation et un gestionnaire de connexion sont prévus, **en ce que** le gestionnaire de synchronisation est approprié pour configurer des liaisons de synchronisation optiques et dédiées et **en ce que** le gestionnaire de connexion est approprié pour configurer à partir d'un ensemble de longueurs d'onde (λ₁, λₙ) des liaisons de communication optiques et commutables seulement en tenant compte des liaisons de synchronisation dédiées.

2. Système de transmission selon la revendication 1, **caractérisé en ce qu'**au moins trois éléments de réseau (NE1, NE2, NE3) contenant au moins un convertisseur électrique/optique (E/O1, E/O2, EOn) et au moins un convertisseur optique/électrique (O/E1, O/E2, O/Em) sont reliés entre eux par des lignes optiques, **en ce qu'**au moins un connecteur croisé (O-XC) optique est branché entre les éléments de réseau (NE1, NE2, NE3) et **en ce que** le au moins un connecteur croisé (O-XC) optique est approprié pour utiliser des longueurs d'onde (λ₁, λₙ) individuelles pour la transmission commutée de signaux de réseau (NE1, NE2, NE3) à un autre élément de réseau (NE1, NE2, NE3).

3. Signal de transmission selon la revendication 1, **caractérisé en ce qu'**au moins trois éléments de réseau (NE1, NE2, NE3) reliés par des lignes optiques sont prévus, **en ce que** les éléments de réseau (NE1, NE2, NE3) sont des éléments SDH ou SONET, **en ce que** le gestionnaire de synchronisation est approprié pour mettre en place une synchronisation hiérarchique ou une synchronisation réciproque entre les éléments de réseau (NE1, NE2, NE3) et **en ce que** le gestionnaire de connexion est approprié pour vérifier avant la commutation d'une liaison de communication optique si la synchronisation mise en place est altérée par la commutation envisagée.

4. Système de transmission selon la revendication 3, **caractérisé en ce que** le gestionnaire de synchronisation ou le gestionnaire de connexion ont accès à un tableau stocké dans lequel la topologie des liaisons de synchronisation est mémorisée et **en ce qu'**une liaison de synchronisation alternative manquante est considérée comme un critère pour une altération de la synchronisation mise en place.

5. Système de transmission selon la revendication 3, **caractérisé en ce que** le gestionnaire de connexion ne peut effectuer la commutation planifiée que si aucune altération ou une altération acceptable de la synchronisation mise en place existe.

6. Procédé pour la transmission optique de signaux électriques, dans lequel les signaux électriques à transmettre font l'objet d'une conversion électrique/optique (E/01, E/02, E/On) et sont transmis dans le multiplexage de longueur d'onde,
**caractérisé en ce que**,
des liaisons de synchronisation optique dédiées sont configurées et **en ce que**, à partir d'un ensemble de longueurs d'onde (λ₁, λₙ), des liaisons de communication optiques et commutables sont configurées seulement en tenant compte des liaisons de synchronisation dédiées.

7. Procédé selon la revendication 6, **caractérisé en ce que,** dans une logique spéciale, un contrôle est effectué en faisant appel à des critères prédéfinis pour savoir si la commutation envisagée d'une liaison de communication a une répercussion non souhaitée sur les liaisons de synchronisation et **en ce que** la commutation envisagée est interdite dans le cas d'unc conséquence non souhaitée.
